# EUROPÄISCHE PATENTANMELDUNG

(11) **EP 3 473 316 A1**
(43) Veröffentlichungstag der Anmeldung: **24.04.2019**
(21) Anmeldenummer: 17196872.0
(22) Anmeldetag: 17.10.2017
(51) Int. Cl.: B01D 3/02, B01D 1/18, B01D 5/00

(54) **AUFBEREITUNG VON GEFILTERTEN MEDIEN UND FILTERHILFSMITTEL**

(71) Anmelder: Hydro Aluminium Rolled Products GmbH, 41515 Grevenbroich (DE)
(72) Erfinder: Draese, Stephan, 41334 Nettetal (DE); Güßgen, Olaf, 50931 Köln (DE); Seiferth, Oliver, 51143 Köln (DE)
(74) Vertreter: Cohausz & Florack

(57) **Zusammenfassung**

In einem Verfahren zur Rückgewinnung von Walzöl und Filterhilfsmittel aus einem Gemisch aus zur Reinigung von Walzöl gebrauchtem Filterhilfsmittel und Walzöl werden das Gemisch aus Walzöl und Filterhilfsmittel einer Vakuumdestillation unter Rühren in einem mit Rührwerk ausgestatteten Reaktor unterzogen, wobei das Walzöl kondensiert und gesammelt wird und ein zum Walzen wiederverwertbares Walzöl und ein pulverförmiges wiederverwertbares Filterhilfsmittel erhalten werden.

## Beschreibung

### TECHNISCHES GEBIET DER ERFINDUNG

Die Erfindung betrifft ein Verfahren zur Rückgewinnung von Walzöl und Filterhilfsmittel aus zur Filtration von Walzöl gebrauchtem Filterhilfsmittel. Das dabei zurückgewonnene Filterhilfsmittel kann wieder zur Reinigung von Walzöl oder für andere Zwecke verwendet werden. Das zurückerhaltene Öl kann im Walzprozess wiederverwendet werden.

### TECHNISCHER HINTERGRUND DER ERFINDUNG

Beim reduzierenden Kaltwalzen, beim Nachwalzen und auch bei Präge- und Texturierstichen in Kaltwalzwerken für metallische Werkstoffe werden häufig sogenannte Walzöle als Kühlschmierstoff eingesetzt. Diese Walzöle sind komplexe Kohlenwasserstoffgemische mit Additiven und dienen im Walzprozess der Schmierung, Kühlung und Reinigung. Sie haben damit einen großen Einfluss auf die Wirtschaftlichkeit der Produktion und die Qualität der durch das Walzen hergestellten Erzeugnisse.

Üblicherweise werden Walzöle in Kaltwalzwerken in Umlaufsystemen aus Reinöltank, Förderpumpen, Ölverteilung, Auffangwanne, Schmutzöltank, Filtration, Kühlung und Reinöltank eingesetzt. Kontinuierlich wird die Umformzone oder Prägezone mit Walzöl beaufschlagt. Kontinuierlich werden in der Filtration Verunreinigungen entfernt und in der Kühlung Wärme entzogen. Bei den Verunreinigungen handelt es sich im Wesentlichen um Abrieb und Metallseifen.

Der Filtration der Walzöle ist eine besondere Bedeutung beizumessen, da deren Kontinuität und Funktion einen entscheidenden Einfluss auf die Produktivität des Prozesses und die Qualität des Produkts haben. Die Filtration der Walzöle erfolgt beispielsweise durch die sogenannte Anschwemmfiltration mit Horizontalplatten-Druckfiltern oder über Rückspülfilter. Dabei werden Filterhilfsmittel wie Perlite, Kieselgure, Bleicherden oder deren Gemische verwendet. Bei der Filtration wird der Walzabrieb in den aus Filterhilfsmitteln gebildeten Filterkuchen mechanisch eingelagert und Metallseifen durch chemisch aktive Komponenten entfernt. Gleichzeitig werden dort aber auch größere Mengen Walzöl gebunden. Ein typischer Filterkuchenabfall aus Horizontalplatten-Druckfiltern enthält neben etwa 1% Metallabrieb auch etwa 40% Walzöl.

Zur Entsorgung werden die Walzöl enthaltenden Filtererden bisher als Abfall behandelt und einer thermischen Verwertung zugeführt. Diese Form der Entsorgung liegt auch nahe, weil der Walzöl enthaltende Filterkuchen einen hohen Brennwert hat und sehr gut brennt. Die bei der bisherigen Verbrennung des Walzöl enthaltenden Filterkuchens anfallenden Abgase sind darüber hinaus leicht zu reinigen. Aus diesem Grund war die thermische Nutzung dieses Abfallmaterials naheliegend.

Nachteilig an dieser ständig geübten Verfahrensweise ist, dass eine große Menge Öl bzw. Kühlschmierstoff durch Filtrationshilfsmittel ausgetragen wird und Öl als auch Filterhilfsmittel wegen der Verbrennung endgültig verloren gehen. Darüber hinaus fallen insgesamt auch große Abfallmengen wegen der gebrauchten Filterhilfsmittel an. Das gleiche gilt für eine Filtration oder Reinigung des verunreinigten Öls über Rückspülfilter. Diese ständig durchgeführte Verbrennung ist folglich auch mit hohen Kohlenstoffdioxidemissionen verbunden. Da die primären Walzölquellen weniger werden, wird Walzöl immer wertvoller und die Walzölpreise sind in den vergangenen Jahren erheblich gestiegen.

Man könnte darüber hinaus an rein destillative Verfahren zur Abtrennung des Öls von den Feststoffen denken. Hierzu sind jedoch hohe Investitionskosten in Betracht zu ziehen. Der Energieaufwand ist hoch. Durch die thermische Beanspruchung des Walzöls während der Destillation kann dessen Qualität sinken, weil sich im Öl Crackprodukte bilden können. Eine entsprechende Anlage ist nie in Betrieb genommen worden. Zentrifugale Trennverfahren haben eine unzureichende Partikelabscheiderate bei kleinen Partikeldurchmessern und erscheinen daher auch nicht geeignet zur Abtrennung von verunreinigenden Feststoffen aus dem Walzöl.

Es besteht sowohl aus ökonomischen als auch ökologischen Gründen ein großes Bedürfnis, ein Verfahren zur Aufbereitung von mit Walzöl behaftetem Filterhilfsmittel bereitzustellen, das nicht nur Walzöl in einer Qualität zur sofortigen Wiederverwendung bereitstellt sondern darüber hinaus eine Weiterverwendung des gebrauchten Filterhilfsmittels ermöglicht.

Der Erfindung liegt folglich die Aufgabe zugrunde, ein Verfahren zur Rückgewinnung von Öl und Filterhilfsmittel aus dem mit Walzöl behafteten Filterhilfsmittel bereitzustellen. Produkte des Verfahrens sollen ein wiederverwertbares Walzöl und ein wiederverwertbares Filterhilfsmittel sein.

Gelöst wird diese Aufgabe durch ein Verfahren zur Abdampfung des Öl enthaltenden Ausgangsmaterials unter Vakuum. Folglich wird die Rückgewinnung von Walzöl aus zur Filtration von Walzöl gebrauchtem Filterhilfsmittel erreicht, in dem man zur Trennung von Walzöl und Filterhilfsmittel das gebrauchte, Walzöl enthaltende Filterhilfsmittel einer Vakuumdestillation (Vakuumabdampfung) unter Rühren in einem mit Rührwerk ausgestatteten Reaktor unterzieht, wobei das destillativ von dem Filterhilfsmittel und Aluminiumteilchen abgetrennte Walzöl zur Verwendung in Walzverfahren wiederverwertbar ist und ein pulverförmiges wiederverwertbares Filterhilfsmittel anfällt.

Das erfindungsgemäße Verfahren führt zu einer deutlichen Verringerung des Frischölbedarfs einer Walzanlage und damit auch zur Verringerung der Betriebskosten der industriellen Walzfertigung. Die Wiederverwertung des entölten Filterhilfsmittels und des erhaltenen Walzöls schont die natürlichen Ressourcen. Die befürchtete Verunreinigung durch Crackprodukte tritt nicht auf.

### BESCHREIBUNG DER BEVORZUGTEN AUSFÜHRUNGSFORMEN

Das erfindungsgemäße Verfahren ist eine vakuum-thermische Rückgewinnung von Filterhilfsmittel und Walzöl aus mit gebrauchtem Walzöl behafteten Filterhilfsmittel (Filtererden). Das erfindungsgemäße Verfahren ermöglicht die Umwandlung des gebrauchten Filterhilfsmittels aus einem Abfallstoff in ein Einsatzmaterial, das zur Verwendung in weiteren industriellen Verfahren geeignet ist. Dadurch fällt insgesamt viel weniger Abfall an.

So kann das vom Öl befreite Filterhilfsmittel als Adsorbens oder als Filtrationshilfsmittel beispielsweise in der industriellen Abwasserbearbeitung verwendet oder im erfindungsgemäßen Verfahren wiedereingesetzt werden. Das erfindungsgemäße Verfahren führt zu einem deutlich verringerten Neueinkauf von Walzöl in der Metallfolien und Metallbänder herstellenden Industrie und geht einher mit einer erheblichen Ressourcenschonung. Das erfindungsgemäße Verfahren führt schließlich zu einer deutlichen Verringerung von Kohlendioxidemission in industriellen Walzanlagen, weil gebrauchtes Walzöl nicht mehr verbrannt wird. Es ist ein sogenanntes nachhaltiges Verfahren.

Überraschend wurde festgestellt, dass sich durch eine Vakuumtrocknung oder Vakuumdestillation bis zu 99 Gew.-% des Walzöls aus dem Filterkuchen rezyklieren lassen und dessen Qualität, den direkten Wiedereinsatz als Walzöl zulässt. Die Begriffe Vakuumtrocknung und Vakuumdestillation haben zum Zwecke der Beschreibung dieser Erfindung dieselbe Bedeutung. Überraschend ist ferner, dass das vom Walzöl befreite Filterhilfsmittel in einer wiederverwertbaren Qualität anfällt.

Ausgangsmaterial der destillativen Abtrennung des Walzöls aus dem Filterhilfsmittel ist eine pastöse und/oder stichfeste Masse, die Filterhilfsmittel, Metallabrieb und Walzöl enthält. Diese Masse wurde von dem Filtervliesmaterial der Filtriereinrichtung getrennt. Der Walzölanteil des Ausgangsmaterials kann im Bereich von 30 Gew.-% bis 70 Gew.-%, 35 Gew.-% bis 60 Gew.-% oder 35 Gew.-% bis 45 Gew.-%, jeweils bezogen auf die Masse des Ausgangsmaterials, betragen. Der Anteil an Filterhilfsmittel im Ausgangsmaterial des erfindungsgemäßen Verfahrens kann 30 Gew.-% bis 70 Gew.-%, 40 Gew.-% bis 65 Gew.-% oder 55 bis 65 Gew.-%, jeweils bezogen auf dessen Masse, betragen. Das Ausgangsmaterial der Vakuumdestillation kann ferner 0,2 Gew.-% oder 0,8 Gew.-% bis 5 Gew.-% Metallabrieb, bezogen auf dessen Masse aufweisen.

In Filtrationseinrichtungen zur Reinigung von Walzöl werden als Filterhilfsmittel übliche Filtererden eingesetzt werden. Diese Filterhilfsmittel bzw. Filtererden umfassen beispielsweise Perlite, Bleicherden, Kieselgure, Cellulosen, Kohlen, weitere dem Fachmann bekannte anorganische Filterhilfsmittel sowie Gemische dieser Filterhilfsmittel.

Das Walzöl kann neben einem schmieraktiven Öl mit beispielsweise 10 bis 50 Kohlenstoffatomen, schmieraktive Fettsäuren, schmieraktive Ester von Fettsäuren und Dicarbonsäuren sowie schmieraktive Fettalkohole enthalten. Schmieraktive Öle sind beispielsweise Mineralöle, pflanzliche Öle oder synthetisch erzeugte Öle. Walzöle können darüber hinaus verschiedene Additive wie Tenside, Korrosionsschutzmittel, Hochdruckadditive und Buntmetallinhibitoren enthalten.

Die Destillation wird derart durchgeführt, dass man im Reaktor einen Unterdruck einstellt. Der im erfindungsgemäßen Verfahren einzustellende Unterdruck kann 0 mbar bis 20 mbar, vorzugsweise 10 mbar bis 16 mbar und besonders bevorzugt etwa 14 mbar betragen. Der erfindungsgemäß einzustellende Unterdruck ist durch Inertgas geregelt. Als Inertgas kann vorzugsweise Stickstoff verwendet werden. Die Temperatur im Reaktor und insbesondere im Sumpf des Reaktors kann eine Temperatur von 60 °C bis 300 °C sein. Vorzugsweise beträgt die Temperatur im Reaktor und insbesondere im Sumpf des Reaktors 60°C bis 200°C oder 60 °C bis 150°C betragen. Die gewählte Temperatur im Reaktor ist abhängig von dem Siedepunkt der Bestandteile des Walzöls. Unter den vorgenannten Bedingungen wird das Walzöl in den gasförmigen Zustand überführt. An einem Kondensator kondensiert das Walzöl und wird gesammelt. Pulverförmiges vom Walzöl getrenntes Filterhilfsmittel verbleibt im Reaktor und wird anschließend daraus entfernt.

Ein Reaktor zur Durchführung des erfindungsgemäßen Verfahrens umfasst einen zum Rühren von pastösen Massen geeigneten Rührer. Zur Vermeidung von partiellen Überhitzungen der pastösen Masse aus Filterhilfsmittel, Metallabrieb und Walzöl ist ein Rührer erforderlich, der auch eine pastöse Masse im Bereich der Reaktorwand erfasst und im Reaktor in Bewegung hält. Das Totvolumen im Reaktor soll folglich möglichst gering gehalten. Das Abdampfen des Walzöl aus dem Filterhilfsmittel kann beispielsweise in einem Vakuumrührwerkstrockner erfolgen. Das pastöse Ausgangsmaterial kann durch Teller- oder Schaufelrührwerke ständig durchmischt werden.

Die Anlage zur Durchführung des erfindungsgemäßen Verfahrens kann einen Beschickungsbehälter, einen Rührwerksantrieb, eine Wandheizschlange und einen beheizbaren Doppelboden, eine Entleerungsklappe für das getrocknete Filterhilfsmittel, einen Brüdenpuffer, einen Kondensator und Auffanggefäße für die zurückgewonnenen Verfahrensprodukte des erfindungsgemäßen Verfahrens umfassen. Der Reaktor verfügt über Mittel zum Anlegen eines Vakuums. Der Reaktor ist mit einer Kondensationseinrichtung verbunden oder enthält eine solche und kann mit einer Flüssigkeit gekühlt werden.

Am Kopf des Reaktors wird das Walzöl kondensiert. Das Destillat weist eine Qualität auf, die dessen Weiterverwendung als Walzöl ohne Einschränkung erlaubt. Alternativ kann ein Vakuum-Zweiwalzentrockner eingesetzt werden. Die Destillation erfolgt vorzugsweise unter weitgehendem Ausschluss von Sauerstoff. Dadurch sollen chemische Reaktionen unter Einschluss von Sauerstoff während der Destillation vermieden werden.

Das entölte Filterhilfsmittel mit gegebenenfalls vorhandenem Metallabrieb wird aus dem Sumpf des Reaktors entfernt. Es liegt als ein feinteiliges Pulver vor, das je nach Zusammensetzung reaktiv gegenüber Luft und Wasser ist. Zur Verringerung der Reaktivität und zur Verbesserung der Qualität und der Einsetzbarkeit kann das erhaltene Pulver einer alkalischen Wäsche mit einer wässrigen Alkalilösung oder einer sauren Wäsche mit einer wässrigen Mineralsäure unterzogen werden, wodurch ein für weitere Anwendungen sicher und kostengünstig einsetzbarer Rohstoff entsteht.

Mit der Rückgewinnung von Walzöl aus Filterhilfsmitteln werden große Mengen an Abfall vermieden, weil das von Öl befreite Filterhilfsmittel (das getrocknete Filterhilfsmittel) nicht mehr der Verbrennung zugeführt werden muss. Einsatzgebiete für wiederaufbereitete Filterhilfsmittel sind beispielsweise die Klärung und Konditionierung von Industrieabwässern und Kommunalabwässern.

Eine beispielhafte Ausführungsform des erfindungsgemäßen Verfahrens wird nachfolgend beschrieben. Aus einem Vorlagebehälter wird gebrauchtes mit Walzöl behaftetes Filtermaterial mit einem Förderwerk in die Kopföffnung eines Reaktors eingebracht. Der Reaktor liegt auf Wägezellen, um den Füllgrad des Reaktors zu bestimmen. Der Reaktor hat ein Arbeitsvolumen von 5 m³. Das feuchte Füllgut, das Ausgangsmaterial des erfindungsgemäßen Verfahrens ist, hat eine Schüttdichte von etwa 0,5 kg/l. Während des Befüllens des Reaktors mit dem gebrauchten Filtermaterial wird über ein Feinventil permanent ein leichter Stickstoffstrom in den Reaktor geleitet. Beim Befüllen des Reaktors läuft der Rührer im Reaktor mit geringer Geschwindigkeit, um eine Homogenisierung und ein Setzen des Füllguts im Reaktor zu erreichen. Enthält der Reaktor eine Füllmenge von etwa 2.500 kg wird das Befüllen abgebrochen. Der Reaktor wird dann verschlossen. Die Vakuumpumpen werden angestellt und ein leichter Stickstoffstrom strömt weiter in den Reaktor hinein. Auch Kühl- und Heizsysteme werden angestellt. Der Reaktor wird evakuiert bis auf einen Innendruck von 20 mbar. Nachdem sich der Innendruck 50 mbar genähert hat, kann der Stickstoffzustrom gesenkt oder geschlossen werden. Die Drehzahl des Rührers wird erhöht, wobei der Reaktorinhalt erwärmt wird.

Im Verlauf der Destillation steigt die Temperatur des Reaktorinhalts an wie auch die Kopftemperatur (Brüdentemperatur) im Reaktor. Zunächst verdampft im Vorlauf ein Wasser. Das Wasser ist das Kristallwasser des Filtermaterials und Wasser, das als Verunreinigung im Filtermaterial vorhanden ist. Öl wird bei der Destillation des Wassers teilweise mitgerissen. Der kondensierte Vorlauf wird über eine Ventilschaltung im Vorlauftank gesammelt.

Ist das Füllgut im Reaktor entwässert, steigt die Reaktorinnentemperatur weiter an. Die Kopftemperatur im Brüdenrohr kann zwischenzeitlich wieder sinken, solange keine Komponente im Reaktor ihren Siedepunkt erreicht hat. Mit steigender Temperatur im Reaktor beginnt das Walzöl zu sieden und zu destillieren. Das kondensierte und wiedergewonnene Öl wird in einen Vorratstank geleitet. Die Destillation wird bis zu einer voreingestellten Reaktor- und/oder Kopftemperatur fortgeführt und dann beendet. Die Temperierung des Reaktors schaltet auf Kühlung und der Unterdruck im Reaktor wird mit Öffnen des Feinventils langsam unter Stickstoffzufuhr gebrochen. Die Vakuumpumpen fahren ihre Leistung so lange gesteuert zurück bis Reaktorinnendruck und Außendruck übereinstimmen. Über ein Ausgleichsventil und ein geringes Schleichvolumen aus der Stickstoffleitung wird dafür gesorgt, dass kein Sauerstoff von außen ins Innere des Reaktors gezogen werden kann. Das gesamte Anlagensystem wird auf eine Rückstandstemperatur von unter 50 °C gekühlt bevor es geöffnet und das vom Öl getrennte Filtermaterial am Boden des Reaktors aus dem Reaktor entfernt wird.

## Patentansprüche

1. Verfahren zur Rückgewinnung Filterhilfsmittel und Walzöl aus einem gebrauchtes Walzöl und mit gebrauchtem Walzöl behafteten Filterhilfsmittel enthaltenden Gemisch, **dadurch gekennzeichnet, dass** man das Walzöl und Filterhilfsmittel enthaltende Gemisch einer Vakuumdestillation unter Rühren in einem mit Rührwerk ausgestatteten Reaktor unterzieht, das Walzöl, kondensiert und sammelt, wobei ein zum Walzen wiederverwertbares Walzöl und ein pulverförmiges wiederverwertbares Filterhilfsmittel erhalten wird.

2. Verfahren nach Anspruch 1, **dadurch gekennzeichnet, dass** man das vom Walzöl getrennte Filterhilfsmittel mit einer wässrigen alkalischen Flüssigkeit wäscht.

3. Verfahren nach Anspruch 1, **dadurch gekennzeichnet, dass** man das vom Walzöl getrennte Filterhilfsmittel mit einer wässrigen mineralsauren Flüssigkeit wäscht.

4. Verfahren nach Anspruch 1, **dadurch gekennzeichnet, dass** man die Vakuumdestillation oder das Abdampfen des Walzöls aus dem Gemisch aus gebrauchtem Walzöl und gebrauchtem Filterhilfsmittel bei Unterdruck bei einer Temperatur im Reaktor von 60°C bis 200 °C durchführt.

5. Verfahren nach Anspruch 1, **dadurch gekennzeichnet, dass** man die Vakuumdestillation oder das Abdampfen des Walzöls aus dem Gemisch aus gebrauchtem Walzöl und gebrauchtem Filterhilfsmittel bei Unterdruck bei einer Temperatur im Reaktor von 60 °C bis 150 °C durchführt.

6. Verfahren nach einem oder mehreren der Ansprüche 1 bis 5, **dadurch gekennzeichnet, dass** man zur Vakuumdestillation in einem Reaktor einen Unterdruck von 0 mbar bis 20 mbar, insbesondere 10 mbar bis 16 mbar, einstellt.

7. Verwendung eines zur Reinigung von Walzöl benutzten Filterhilfsmittels, das einer Vakuumdestillation zur Abtrennung des Walzöls nach einem der Ansprüche 1 bis 6 unterzogen worden ist, als Adsorbens oder Filtrationshilfsmittel zur Aufbereitung industrieller oder kommunaler Abwässer.
